Europäisches Patentamt

European Patent Office

Office européen des brevets

(11) Veröffentlichungsnummer : **0 168 869**
**B1**

(12) **EUROPÄISCHE PATENTSCHRIFT**

(45) Veröffentlichungstag der Patentschrift :
17.08.88

(21) Anmeldenummer : 85201002.4

(22) Anmeldetag : 25.06.85

(51) Int. Cl.⁴ : **F 16 C 33/20, F 16 C 33/04**

(54) Werkstoff zur Herstellung von Verbundlagern für Kurbelwellen.

(30) Priorität : 14.07.84 DE 3425960

(43) Veröffentlichungstag der Anmeldung :
22.01.86 Patentblatt 86/04

(45) Bekanntmachung des Hinweises auf die Patenterteilung : 17.08.88 Patentblatt 88/33

(84) Benannte Vertragsstaaten :
AT DE FR GB IT

(56) Entgegenhaltungen :
FR-A- 2 515 195
GB-A- 2 079 867
GB-A- 2 097 486
Encyclopedia of Chemical Technology, Kirk-Othmer, Third Edition, Volume 18, Seiten 832,833 und 843

(73) Patentinhaber : KOLBENSCHMIDT Aktiengesellschaft
Christian-Schmidt-Strasse 8/12 Postfach 1351
D-7107 Neckarsulm (DE)

(72) Erfinder : Bickle, Wolfgang
Friedenstrasse 13
D-6831 Reilingen (DE)
Erfinder : Pfestorf, Harald
Panoramastrasse 18/1
D-7101 Untereisesheim (DE)

(74) Vertreter : Rieger, Harald, Dr.
Reuterweg 14
D-6000 Frankfurt am Main (DE)

**Beschreibung**

Die Erfindung betrifft einen Werkstoff zur Herstellung von Verbundlagern für Kurbelwellen, bestehend aus einem metallischen auf der Rückseite mit einer 0,05 bis 0,5 mm, vorzugsweise 0,08 bis 0,2 mm dicken elastischen Schicht versehenen Stützrücken aus Stahl, Gußeisen, Bronze, hochfesten Aluminiumlegierungen oder dergleichen und einer Lagermetallschicht, auf der ggf. noch eine Laufschicht angeordnet sein kann.

Es ist bekannt, daß die Kurbelwellenlager als Glied der Kette Kolben — Kolbenbolzen — Pleuelstange — Kurbelwelle — Kurbelgehäuse entscheidend zur Körperschall-Anregung und damit zur Geräuschabstrahlung einer Brennkraftmaschine bzw. eines Kompressors beitragen. Das gilt insbesondere für solche Brennkraftmaschinen bzw. Kompressoren und Fahrzeuge, die zwecks Kraftstoffeinsparung in Leichtbauweise ausgeführt sind und/oder deren Verbrennung optimiert ist. Leichte sind erfahrungsgemäß lauter als schwere Konstruktionen ; harte und damit laute Verbrennungen sind verbrauchsgünstiger. Die Geräuschreduzierung gewinnt in letzter Zeit zunehmend an Bedeutung. Dies ist bedingt sowohl durch die verschärften Umweltschutzbestimmungen als auch durch die Leichtbauweise von Fahrzeugen sowie die gestiegenen Komfortansprüche. Man ist deshalb bestrebt, die Kurbelwellen von dem Kurbelgehäuse soweit wie möglich akustisch zu entkoppeln. So ist in der DE-A-32 16 318 vorgesehen, die unmittelbar körperschallerregten Teile, wie Zylinder, Zylinderkopf, Kolben, Pleuel, Kurbelwellenlager und Kurbelwelle, in einem Triebwerksträger anzuordnen, der seinerseits elastisch mit dem Kurbelgehäuse verbunden ist. Eine solche Bauweise ist wegen des relativ hohen Aufwands für Brennkraftmaschinen von Fahrzeugen nicht geeignet. Die GB-PS 1 137 693 schlägt vor, die Kurbelwellenlager über Schwingungsdämpfer in Form von elastischen Büchsen im Kurbelgehäuse anzuordnen, um die Übertragung von Körperschall von der Kurbelwelle auf das Kurbelgehäuse zu verringern. In dem DE-U-83 09 053 ist ein Kurbelwellenlager beschrieben, bei dem zwischen dem Lager und dem Kurbelgehäuse zusätzlich eine elastische Schicht in Folienstärke aus einem wärmebeständigen Kunststoff wie Polytetrafluoräthylen oder Polyamid angeordnet ist. Schließlich sieht die DE-A-30 17 847 ein Kurbelwellenlager vor, bei dem zwischen einer äußeren Lagerschale und einer inneren Lagerschale ein schwingungsdämpfendes Material angeordnet ist. Diese vergleichsweise komplizierte Konstruktion benötigt einen großen Bauraum.

Es ist daher die Aufgabe der vorliegenden Erfindung, unter Beachtung der Betriebsbedingungen und unter Berücksichtigung der besonderen Anforderungen an die Lagerung von Kurbelwellen, den eingangs beschriebenen Werkstoff zur Herstellung von Verbundlagern so auszubilden, daß die daraus hergestellten Kurbelwellenlager eine geräuschdämpfende Wirkung besitzen, ohne jedoch die Funktion der Kurbelwellen-Lageranordnung in irgendeiner Weise zu beeinträchtigen.

Zur Lösung dieser Aufgabe ist auf der Rückseite des metallischen Stützrückens des Verbundlager-Werkstoffes eine als Rauhgrund dienende Aluminium- bzw. Aluminiumlegierungsschicht aufplattiert sowie mechanisch aufgerauht und mit einer elastischen Schicht aus Polyetheretherketon (PEEK), Polyethersulfon (PES) oder einem Gemisch aus PEEK und PES überzogen. Diese aus der GB-A-2 079 867 und Kirk-Othmer : Encyclopedia of Chemical Technology, Third Edition, Vol. 18, Seiten 832, 833 und 844 bekannten Kunststoffe zeichnen sich durch eine hohe Formbeständigkeit und gute chemische Beständigkeit in der Wärme aus.

Ohne die Bindefestigkeit zu beeinträchtigen, kann die elastische Schicht bis zu 50 Gew. %, vorzugsweise 5 bis 35 Gew. %, pulver- oder faserförmige Füllstoffe, wie Glasfasern, Glasperlen und/oder Kohlefasern, enthalten.

Zur Herstellung des Verbundlager-Werkstoffs werden auf ein Stahlband lagerseitig ein Lagermetallband, beispielsweise aus einer Blei-Zinn-Kupfer-Legierung, und auf der Rückseite ein Aluminiumband gleichzeitig aufplattiert und nach dem Aufrauhen auf die Aluminium- bzw. Aluminiumlegierungsseite pulverförmiges PEEK, PES oder ein Gemisch aus beiden Kunststoffen aufgestreut und auf eine Temperatur von 350 bis 380 °C erwärmt, so daß bei dem abschließenden Verdichten und Kalibrieren die elastische Schicht eine Temperatur von größer 280 °C aufweist.

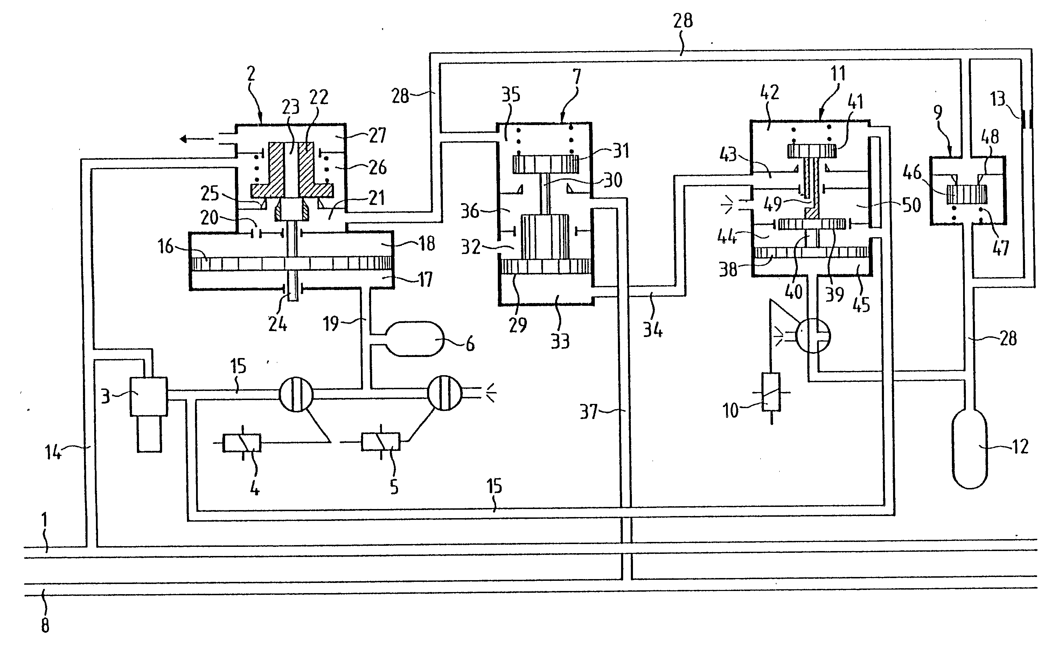

Die Zeichnung zeigt einen Verbundlager-Werkstoff, bestehend aus einem Stahlband (1), dessen Lagerseite mit einer aufplattierten, 0,5 mm dicken Lagermetallschicht (2) aus AlSn20 und dessen Rückseite mit einer aufplattierten, 0,1 mm dicken Aluminiumschicht (3) versehen sind, wobei sich auf der mechanisch aufgerauhten Aluminiumschicht (3) eine 0,1 mm dicke Schicht (4) aus PES befindet. Auf der Lagermetallschicht (2) ist eine dünne Einlaufschicht (5) aus einer Blei-Zinn-Kupfer-Legierung angeordnet.

Die mit der Erfindung erzielten Vorteile bestehen insbesondere darin, daß durch die Anordnung einer elastischen Schicht auf der Rückseite der seit vielen Jahren bewährten aus Verbundlager-Werkstoffen hergestellten Gleitlager für Kurbelwellen die Geräuschentwicklung einer Brennkraftmaschine bzw. eines Kompressors deutlich reduziert wird.

**Patentansprüche**

1. Werkstoff zur Herstellung von Verbundlagern für Kurbelwellen, bestehend aus einem metallischen auf der Rückseite mit einer 0,05 bis 0,5 mm, vorzugsweise 0,08 bis 0,2 mm dicken elastischen Schicht versehenen Stützrücken aus Stahl, Gußeisen, Bronze, hochfesten Aluminiumlegierungen oder dergleichen und einer Lagermetallschicht, auf der ggf. noch eine Laufschicht angeordnet sein kann, gekennzeichnet durch eine auf die Rückseite des metallischen Stützrückens (1) aufplattierte und mechanisch aufgerauhte Aluminiumschicht bzw. Aluminiumlegierungsschicht (3), die mit einer elastischen Schicht (4) aus Polyetheretherketon (PEEK), Polyethersulfon (PES) oder einem Gemisch von PEEK und PES überzogen ist.

2. Werkstoff nach Anspruch 1, dadurch gekennzeichnet, daß die elastische Schicht bis zu 50 Gew. %, vorzugsweise 5 bis 35 Gew. %, pulver- oder faserförmige Füllstoffe, wie Glasfasern, Glasperlen und/oder Kohlefasern, enthält.

3. Verfahren zur Herstellung des Werkstoffs nach einem der Ansprüche 1 oder 2, dadurch gekennzeichnet, daß auf ein Stahlband lagerseitig ein Lagermetallband und rückseitig ein Aluminiumband bzw. Aluminiumlegierungsband gleichzeitig aufplattiert werden, anschließend pulverförmiges PEEK, PES oder ein Gemisch beider Kunststoffe auf die aufgerauhte Aluminium- bzw. Aluminiumlegierungsseite aufgestreut und auf eine Temperatur von 350 bis 380 °C, vorzugsweise in reduzierender Atmosphäre, so erwärmt wird, daß zum abschließenden Verdichten und Kalibrieren die elastische Schicht eine Temperatur von größer 280 °C aufweist.

## Claims

1. Material for manufacturing composite bearings for crankshafts, consisting of a metal backing made of steel, cast iron, bronze, high-strength aluminium alloys or the like and provided on the back with an elastic layer 0.05 to 0.5 mm, preferably 0.08 to 0.2 mm thick, and a bearing metal layer, on which optionally a further running layer may be applied, characterised by an aluminium layer or aluminium alloy layer (3) mechanically roughened and clad to the back of the metal backing (1), which layer is coated with an elastic layer (4) of polyether ether ketone (PEEK), polyether sulphone (PES) or a mixture of PEEK and PES.

2. Material according to Claim 1, characterised in that the elastic layer contains up to 50 wt. %, preferably 5 to 35 wt. %, powdered or fibrous fillers, such as fibreglass, glass beads and/or carbon fibres.

3. Method for manufacturing the material according to one of Claims 1 or 2, characterised in that on the bearing side a bearing metal strip and on the back an aluminium strip or aluminium alloy strip are simultaneously clad to a steel strip, then powdered PEEK, PES or a mixture of both plastics is sprinkled on to the roughened aluminium or aluminium alloy side and heated to a temperature of 350 to 380 °C, preferably under a reduced atmosphere, so that for the concluding compression and calibration the elastic layer has a temperature of more than 280 °C.

## Revendications

1. Matériau pour la fabrication de paliers composites pour vilebrequins, constitué par un support arrière métallique, dont le verso porte une couche élastique possédant une épaisseur comprise entre 0,05 et 0,5 mm et de préférence entre 0,08 et 0,2 mm et constituée par de l'acier, de la fonte, du bronze, des alliages d'aluminium très résistants ou analogues, et par une couche d'un métal antifriction, sur laquelle peut éventuellement être aussi disposée une couche de glissement, caractérisé par une couche d'aluminium ou d'alliage d'aluminium (3), déposée par placage sur le verso du support arrière métallique (1), rendue rugueuse mécaniquement et recouverte par une couche élastique (4) formée d'un polyéthéréther-cétone (PEEK), d'un polyéther-sulfone (PES) ou d'un mélange de PEEK et de PES.

2. Matériau suivant la revendication 1, caractérisé par le fait que la couche élastique contient jusqu'à 50 % en poids et de préférence entre 5 et 35 % en poids de matières de charge en forme de poudre ou de fibres, comme par exemple des fibres de verre, des perles de verre et/ou des fibres de carbone.

3. Procédé pour fabriquer le matériau suivant l'une des revendications 1 ou 2, caractérisé par le fait qu'on dépose simultanément par placage une bande formée d'un métal antifriction sur la face d'une bande d'acier, tournée vers le palier, et une bande formée d'aluminium ou d'un alliage d'aluminium sur le verso, qu'on disperse ensuite, à l'état pulvérulent, du PEEK, du PES ou un mélange de ces deux matières plastiques sur la face, rendue rugueuse, de l'aluminium ou de l'alliage d'aluminium, et qu'on le chauffe à une température comprise entre environ 350 et 380 °C, de préférence dans une atmosphère réductrice, de manière que, pour la densification et le calibrage terminaux, la couche élastique possède une température supérieure à 280 °C.